# EUROPEAN PATENT SPECIFICATION

(11) **EP 0 649 086 B1**
(45) Date of publication and mention of the grant of the patent: **19.07.2000**
(21) Application number: 94307584.6
(22) Date of filing: 17.10.1994
(51) Int. Cl.: G06F 9/38

(54) **Microprocessor with speculative execution**
Mikroprozessor mit spekulativer Befehlsausführung
Microprocesseur avec exécution spéculative

(30) Priority: 18.10.1993 US 138781
(43) Date of publication of application: 19.04.1995
(73) Proprietor: NATIONAL SEMICONDUCTOR CORPORATION, Richardson, Texas (US)
(72) Inventor: Bluhm, Mark, Plano, Texas 75082 (US); Garibay, Raul A , Jr, Dallas , Texas 75248 (US); McMahan, Steven C., Richardson, Texas 75082 (US); Lie, Milton, McKinney, Texas 75070 (US); Quattromani, Marc A., Allen, Texas 75002 (US); Hervin, Mark W., Dallas, Texas 75252 (US)
(74) Representative: Harris, Ian Richard

(56) References cited:
- EP-A- 0 301 220
- EP-A- 0 515 166
- EP-A- 0 529 305
- WO-A-93/18450
- IEEE TRANSACTIONS ON COMPUTERS vol. C-36, no. 12 , December 1987 , NEW YORK US pages 1496 - 1514 HWU AND PATT 'Checkpoint repair for high-performance out-of-order execution machines'
- IBM TECHNICAL DISCLOSURE BULLETIN. vol. 36, no. 1 , January 1993 , NEW YORK US pages 243 - 245 'MSIS branch prediction'

## Description

### CROSS REFERENCE TO RELATED APPLICATIONS

The subject matter of this application is related to that disclosed in Applications Ser. No. 08/138783 (Atty Docket CX-00180) titled "Branch Processing Unit", filed October 18, 1993, Ser No. 08/138789 (Atty Docket CX-00190) titled "Pipelined Processor With Independent Instruction Issuing", filed October 18, 1993, and Ser No. 08/138654 (Atty Docket CX-186) titled "Control of Data for Speculation Execution and Exception Handling in a Microprocessor with Write Buffer", filed October 18, 1993, all assigned to the assignee of this application. US 08/138,783 has a published European counterpart EP-A-0649084. US 08/138,789 has a published European counterpart EP-A-0649085. US 08/138,654 has issued as US 5,524,009.

### BACKGROUND

**Technical Field.** The invention relates generally to pipelined digital processors, and more particularly to structures and methods for speculative execution in a pipelined processor. In an exemplary embodiment, speculative execution for branches and floating point instructions issued to a floating point unit is supported for a superscalar, superpipelined microprocessor compatible with the x86 instruction set architecture.

**Related Art.** Computers employ pipeline techniques to reduce the average execution time per instruction. An execution pipeline is divided into pipe stages - instructions are executed in stages allowing multiple instructions to be overlapped in the pipeline. The goal is for each pipe stage to complete all associated operations on an instruction in a clock cycle, such that instructions continuously advance to the next pipe stage and an instruction completes execution each clock cycle.

Pipeline performance is significantly affected by hazards that prevent a pipe stage from completing its operations in a single dock cycle, thereby causing pipe stalls or bubbles. Three general classes of pipeline hazards are: (a) structural hazards which arise from hardware resource conflicts; (b) data hazards which arise from dependency of an instruction on the results of a previous instruction; and (c) control hazards which arise from events that change the flow of the instruction stream - change of flow instructions and exceptions.

Change of flow (COF) hazards significantly impact pipeline performance, typically accounting for 15-30% of the instruction mix. For example, in the x86 instruction set architecture, COFs occur on the average every four to six instructions. COF instructions include branches (including loops), jumps, and call/returns - branches are conditional in that the branch may be taken or not taken (depending, for example, on the status of condition codes), while jumps and call/returns are unconditional (always taken). Taken branches and unconditional COFs (UCOFs) interrupt the instruction stream to cause instruction fetch to proceed from a target address.

Exceptions (also referred to as faults, aborts, traps, or interrupts) cause program execution to be interrupted, and an exception handler invoked. For consistency in terminology, exceptions (or faults) are interruptions in program flow resulting from the execution of instructions (as distinguished from interrupts which are interruptions caused by external events). An exception may occur when an instruction is executing in the CPU (central processing unit) core, or in a separate execution unit such as a floating point unit.

Without limiting the scope of the invention, this background information is provided in the context of a general problem to which the invention has application: in a pipelined CPU (central processing unit) that executes the x86 instruction set, speculatively executing instructions issued after predicted branches and floating point instructions which are sent to a floating point unit, and repairing the processor state if a branch is mispredicted or a floating point instruction faults.

Branches and exceptions are defined to be control hazard instructions, and are distinguished from, for example, external hardware interrupts. Branches are the most predictable and prevalent of the control hazard instructions, and computer designers have undertaken concentrated efforts to reduce the impact of branches on the performance of pipelined processors.

Speculative execution involves speculatively issuing branches (or other control hazard instructions), and speculatively executing those instructions such that the processor state (instruction pointer, stack pointer, registers, condition codes, flags) changes. To support speculative execution, if the speculation turns out to be in error, repair is required to recover the processor state at the point of speculative issue.

To reduce execution stalls due to branches, some computer architectures use a branch target buffer (BTB), including a target cache for storing the predicted address of the next instruction --either the fall through address for a branch predicted not taken, or the target address of a branch predicted taken. The BTB includes branch prediction and branch resolution logic for predicting whether a branch will be taken or not taken, and for resolving predicted branches and repairing mispredictions. The branch prediction logic implements a prediction algorithm based on the prior taken/not taken history for the branch.

The branch resolution logic receives inputs (such as condition codes), resolves whether the branch actually was or was not taken, and repairs mispredicted branches. Repair of mispredicted branches involves terminating execution of the instructions in the mispredicted direction, restoring the state of the machine, and restarting execution from the correct instruction -- a branch misprediction results in a branch penalty corresponding to the number of clocks lost by mispredicting the branch rather than predicting the branch correctly.

Saving processor states at appropriate points of execution in order to effect repair to a known previous state is referred to a checkpointing. Examples of particular algorithms for performing checkpoint repair are described by Wen-hei W. Hwu and Yale N. Patt in "Checkpoint repair for High-Performance Out-of Order Execution Machines, "IEEE Transactions on Computers, vol. C-36, no. 12, December 1987, pages 1496-1514.

Further background information concerning pipelined processor and branches is contained in an article by Antonio Gonzalez, "A survey of branch techniques in pipelined processors", Microprocessors and Microprogramming 36(1993) October, No. 5, pages 243-257.

### SUMMARY

In accordance with one aspect of the invention, there is provided a pipelined processor with an execution pipeline including an instruction issue stage, an execution stage and at least one intermediate processing stage, the intermediate processing stage and the execution stage including modifiable processor resources that are modified by instruction processing in that stage, the processor selectively issuing branch instructions and then issuing and speculatively processing subsequent instructions in a predicted direction of a branch, comprising: a) branch processing means for predicting the direction of a branch instruction, and for resolving the branch by determining during or after the execution stage whether the actual predicted branch direction is correct; b) speculation control means for selectively directing the instruction issue stage to issue the branch instruction and then, before such branch instruction is resolved, to issue at least one speculative instruction in the predicted direction of the branch; and (c) the or one of the intermediate stages processing the speculative instruction by at least modifying the associated modifiable processor resources, prior to the branch being resolved; characterised in that: (d) each of the execution stage and the at least one intermediate stage includes checkpointing means for checkpointing the modifiable processor resources for such stage; and (e) the speculation control means controls processing of speculative instructions by directing the checkpointing means for each stage that processes a branch instruction (i) to checkpoint modifiable processor resources that a remodified, and in response to a branch misprediction, (ii) to repair such stage by restoring processor state using the corresponding modifiable processor resources.

In accordance with another aspect of the invention, there is provided a method of implementing speculative execution in a pipelined processor with an execution pipeline including an instruction issue stage, an execution stage and at least one intermediate processing stage, the intermediate processing stage and the execution stage including modifiable processor resources that are modified by instruction processing in that stage, the processor selectively issuing branch instructions and then issuing and speculatively processing subsequent instructions in a predicted direction of a branch, comprising: (a) predicting the direction of a branch instruction, and resolving the branch by determining during or after the execution stage whether the actual predicted branch direction is correct; (b) selectively directing the instruction issue stage to issue the branch instruction and then, before such branch instruction is resolved, to issue at least one speculative instruction in the predicted direction of the branch; and (c) processing the speculative instruction in the at least one intermediate stage, including modifying the associated modifiable processor resources, prior to the branch being resolved; characterized by: (d) checkpointing the modifiable processor resources for each of the execution stage and the at least one intermediate stage; (e) controlling processing of speculative instructions for each stage that processes a branch instruction by (i) checkpointing modifiable processor resources that are modified, and in response to branch misprediction, (ii) repairing such stage by restoring processor state using the corresponding checkpointed modifiable processor resources.

An embodiment of the invention provides a pipelined processor with an execution pipeline that includes an instruction issue stage, an execution stage and at least one intermediate processing stage, where the intermediate processing stage and the execution stage include modifiable processor resources that are modified by instruction processing in that stage. The processor selectively issuing branch instructions, and then issues and speculatively processes subsequent instructions in a predicted direction of a branch.

In an embodiment of the invention, the processor includes branch processing means and speculation control means. The branch processing means predicts the direction of a branch instruction, and then resolves the branch by determining during or after the execution stage whether the actual predicted branch direction is correct. The speculation control means selectively directs the instruction issue stage to issue the branch instruction and then, before such branch instruction is resolved, to issue at least one speculative instruction in the predicted direction of the branch, such that the speculative instruction is speculatively processed in the at least one intermediate stage, including modifying the associated modifiable processor resources, prior to the branch being resolved.

Each of the execution stage and the at least one intermediate stage has associated with it checkpointing means for checkpointing the modifiable processor resources for such stage. The speculation control means controls processing speculative instructions by directing the checkpointing means for each stage that processes a branch instruction (i) to checkpoint modifiable processor resources that are modified, and in response to a branch misprediction, (ii) to repair such stage by restoring processor state using the corresponding checkpointed modifiable processor resources.

In an embodiment of the invention, the processor implements a method of speculative execution involving: (a) for each branch instruction, predicting the direction of a branch instruction, and for resolving the branch by determining during or after the execution stage whether the actual predicted branch direction is correct; (b) selectively directing the instruction issue stage to issue the branch instruction and then, before such branch instruction is resolved, to issue at least one speculative instruction in the predicted direction of the branch, the speculative instruction being speculatively processed in the at least one intermediate stage, including modifying the associated modifiable processor resources, prior to the branch being resolved; (c) in each of the execution stage and the at least one intermediate stage, controlling processing of speculative instructions by checkpointing modifiable processor resources that are modified, and in response to a branch misprediction, repairing such stage by restoring processor state using the corresponding checkpointed modifiable processor resources.

The invention, the speculation control means may implement repair by broadcasting to each checkpointing means, a repair command that directs the checkpointing means to restore processor state, thereby allowing each checkpointing means to initiate restore substantially simultaneously.

The invention, the speculation control means may include speculation level means for maintaining a count of the number of branch instructions that are issued but not resolved, and for inhibiting the issue stage from issuing a branch instruction if the number of outstanding unresolved branch instructions is equal to a maximum number.

In a particular embodiment, the speculation control means selectively directs the instruction issue stage to issue the branch instruction and then, before such branch instruction is resolved, to issue at least one speculative instruction in the predicted direction of the branch, unless such instruction is subject to a predetermined issue constraint. The checkpointing means for at least one stage may checkpoint only a subset of the corresponding modifiable processor resources, and an issue constraint is that the speculation control means will not issue any instruction that would be speculative if processing that instruction in such stage would modify a processor resource that is not checkpointed.

An embodiment of the invention permits speculative execution of instructions issued after control hazard instructions (such as branches or floating point instructions), including repairing the processor state if program execution is interrupted (such as for a mispredicted branch or floating point exception)..

Embodiments of the invention may be implemented to realize one or more of the following technical advantages. , including the following features. Instructions are speculatively issued past one or more control hazard instructions (such as branches and floating point instructions). (multiple speculation levels are allowed). Speculative execution is allowed through multiple pipe stages, including an execution stage, to permit speculatively issued instructions to complete execution. Multiple pipe stages are checkpointed independently. Pipeline repair can be performed in a single clock by broadcasting a repair command to each checkpointed pipe stage. Speculative execution is allowed past exception-latency instructions (such as floating point) with a significant exception latency, such the instructions may fault after instructions issued speculatively behind it complete execution. Selected issue constraints can be assigned to the speculative issue of selected instruction types so as to limit speculative execution under certain conditions. Checkpointing can be limited to a selected subset of processor resources (such as selected registers, instruction and stack pointers, and condition codes) associated with selected instruction types, such that the entire machine need not be checkpointed. For a more complete understanding of the invention, and for further features and advantages, reference is now made to the Detailed Description of an exemplary embodiment of the invention, together with the accompanying Drawings, it being understood that the invention encompasses any modifications or alternative embodiments that fall within the true scope thereof.

### BRIEF DESCRIPTION OF THE DRAWINGS

Figure 1a illustrates an exemplary superscaler, superpipelined microprocessor according to the invention.
Figure 1b illustrates the execution pipeline stages of the microprocessor, including X and Y pipes.
Figure 1c illustrates an idealized flow of instructions through the X and Y execution pipes.
Figure 2 illustrates an exemplary processor system design using the microprocessor.
Figure 3 illustrates the prefetch buffer, prefetcher, and branch processing unit.
Figure 4 is a flow diagram illustrating speculative instruction issue, including exemplary issue constraints.
Figure 5 illustrates control registers in the register translation unit, and in particular, the checkpoint registers used to support speculative execution.
Figures 6a and 6b illustrate the function of the write buffers in connection with speculative execution, and in particular the write buffer allocation and resolution (retire or invalidate)..

### DETAILED DESCRIPTION

The detailed description of an exemplary embodiment for implementing speculative execution in a pipelined processor according to the invention is organized as follows:
1. Exemplary Processor System
   1.1. Microprocessor
   1.2. System
2. Speculative Execution
   2.1. Terminology
   2.2. Branch Processing Unit
   2.3. Speculative Issue
      2.3.1. Branches
      2.3.2. Floating Point
   2.4. Resources Affected
   2.5. Issue Constraints
3. Processor State
   3.1. Speculation Level
   3.2. Checkpointing
   3.3. Results
4. Resolution/Repair
   4.1. Out-of-Order Retire
   4.2. Single Clock Repair
5. Conclusion
This organizational outline, and the corresponding headings used in this Detailed Description, are provided for convenience of reference only.

The exemplary processor is a superscalar, superpipelined microprocessor compatible with the x86 instruction set architecture (ISA). Detailed descriptions of conventional or known aspects of microprocessor systems are omitted so as to not obscure the description of the invention with unnecessary detail. In particular, certain terminology related to the x86 computer architecture (such as register names, signal nomenclature, etc.) is known to practitioners in the field of microprocessor design.

### 1. Exemplary Processor System

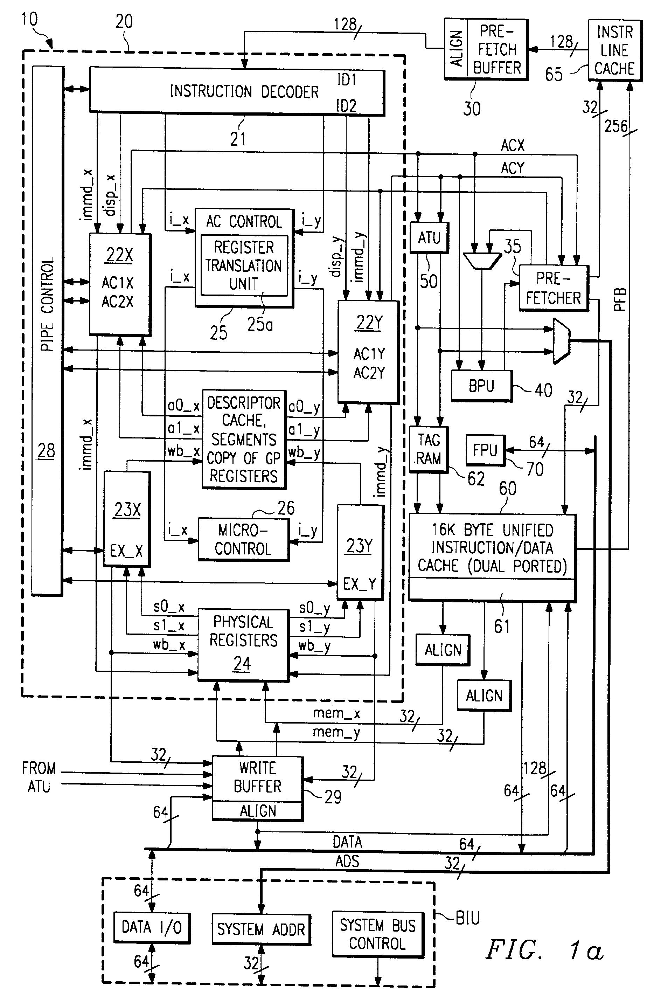

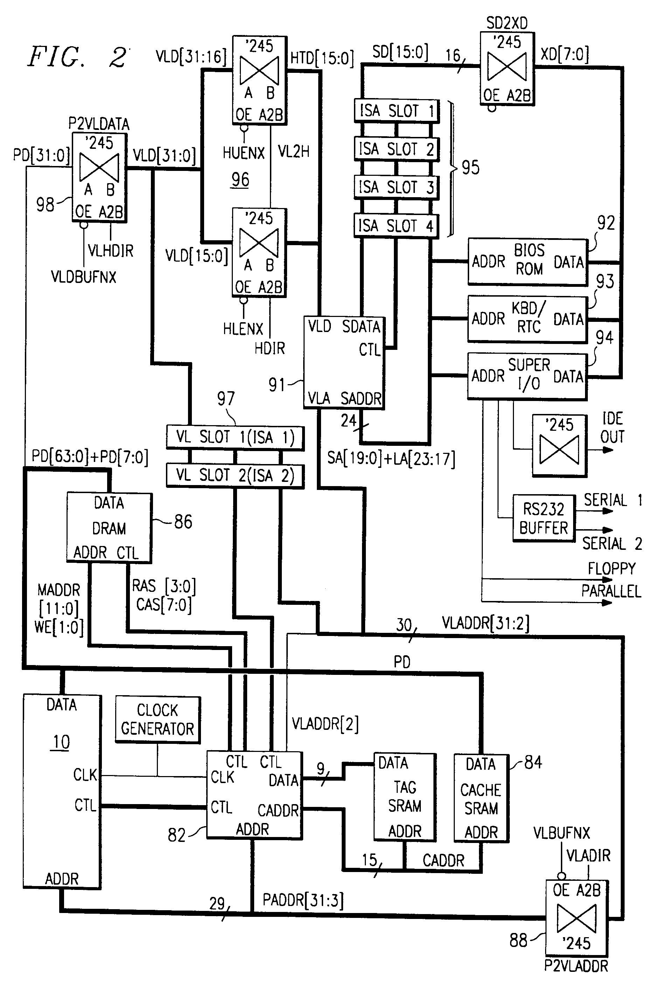

The exemplary processor system is shown in Figures 1a and 1b, and Figure 2. Figures 1a and 1b respectively illustrate the basic functional blocks of the exemplary superscalar, superpipelined microprocessor along with the pipe stages of the two execution pipelines. Figure 2 illustrates an exemplary processor system (motherboard) design using the microprocessor.

### 1.1. Microprocessor

Referring to Figure 1a, the major sub-blocks of a microprocessor 10 include: (a) CPU core 20, (b) prefetch buffer 30, (c) prefetcher 35, (d) BPU (branch processing unit) 40, (e) ATU (Address Translation Unit) 50, and (f) unified 16 Kbyte code/data cache 60, including TAG RAM 62. A 256 byte instruction line cache 65 provides a primary instruction cache to reduce instruction fetches to the unified cache, which operates as a secondary instruction cache. An onboard floating point unit (FPU) 70 executes floating point instructions issued to it by the CPU core 20.

The microprocessor uses internal 32-bit address and 64-bit data buses ADS and DATA. A 256 bit (32 byte) prefetch bus PFB, corresponding to the 32 byte line size of the unified cache 60 and the instruction line cache 65, allows a full line of 32 instruction bytes to be transferred to the instruction line cache in a single clock. Interface to external 32 bit address and 64 bit data buses is through a bus interface unit BIU.

The CPU core 20 is a superscalar design with two execution pipes X and Y. It includes an instruction decoder 21, address calculation units 22X and 22Y, execution units 23X and 23Y, and a register file 24 with 32 32-bit registers. An AC control unit 25 includes a register translation unit 25a with a register scoreboard and register renaming hardware. A microcontrol unit 26, including a microsequencer and microrom, provides execution control.

Writes from CPU core 20 are queued into twelve 32 bit write buffers 29 - write buffer allocation is performed by the AC control unit 25. These write buffers provide an interface for writes to the unified cache -- noncacheable writes go directly from the write buffers to external memory. The write buffer logic supports optional read sourcing and write gathering.

A pipe control unit 28 controls instruction flow through the execution pipes, including keeping the instructions in order until it is determined that an instruction will not cause an exception, squashing bubbles in the instruction stream, and flushing the execution pipes behind branches that are mispredicted and instructions that cause exceptions. For each stage, the pipe control unit keeps track of which execution pipe contains the earliest instruction, and provides a stall output and receives a delay input.

BPU 40 predicts the direction of branches (taken or not taken), and provides target addresses for predicted taken branches and unconditional change of flow instructions (jumps, calls, returns). In addition, it monitors speculative execution in the case of branches and floating point instructions, i.e., the execution of instructions speculatively issued after branches which may be resolved as mispredicted, and floating point instructions issued to the FPU which may fault after the speculatively issued instructions have completed execution. If a floating point instruction faults, or if a branch is mispredicted (which will not be known until the EX or WB stage for the branch), then the execution pipeline must be repaired to the point of the faulting or mispredicted instruction (i.e., the execution pipeline is flushed behind that instruction), and instruction fetch restarted.

Pipeline repair is accomplished by creating checkpoints of the processor state at each pipe stage as a floating point or predicted branch instruction enters that stage. For these checkpointed instructions, all resources (programmer visible registers, instruction pointer, condition code register) that can be modified by succeeding speculatively issued instructions are checkpointed. If a checkpointed floating point instruction faults or a checkpointed branch is mispredicted, the execution pipeline is flushed behind the checkpointed instruction -- for floating point instructions, this will typically mean flushing the entire execution pipeline, while for a mispredicted branch there may be a paired instruction in EX and two instructions in WB that would be allowed to complete.

For the exemplary microprocessor 10, the principle constraints on the degree of speculation are: (a) speculative execution is allowed for only up to four floating point or branch instructions at a time (i.e., the speculation level is maximum 4), and (b) a write or floating point store will not complete to the cache or external memory until the associated branch or floating point instruction has been resolved (i.e., the prediction is correct, or the floating point instruction does not fault).

The unified cache 60 is 4-way set associative (with a 4k set size), using a pseudo-LRU replacement algorithm, with write-through and write-back modes. It is dual ported (through banking) to permit two memory accesses (data read, instruction fetch, or data write) per clock. The instruction line cache is a fully associative, lookaside implementation (relative to the unified cache), using an LRU replacement algorithm.

The FPU 70 includes a load/store stage with 4-deep load and store queues, a conversion stage (32-bit to 80-bit extended format), and an execution stage. Loads are controlled by the CPU core 20, and cacheable stores are directed through the write buffers 29 (i.e., a write buffer is allocated for each floating point store operation).

Referring to Figure 1b, the microprocessor has seven-stage X and Y execution pipelines: instruction fetch IF, two instruction decode stages ID1 and ID2, two address calculation stages AC1 and AC2, execution EX, and write-back WB. Note that the complex instruction decode ID and address calculation AC pipe stages are superpipelined.

The IF stage provides a continuous code stream into the CPU core 20. The prefetcher 35 fetches 16 bytes of instruction data into the prefetch buffer 30 from either the (primary) instruction line cache 65 or the (secondary) unified cache 60. BPU 40 is accessed with the prefetch address, and supplies target addresses to the prefetcher for predicted changes of flow, allowing the prefetcher to shift to a new code stream in one clock.

The decode stages ID1 and ID2 decode the variable length X86 instruction set. The instruction decoder 21 retrieves 16 bytes of instruction data from the prefetch buffer 30 each clock. In ID1, the length of two instructions is decoded (one each for the X and Y execution pipes) to obtain the X and Y instruction pointers - a corresponding X and Y bytes-used signal is sent back to the prefetch buffer (which then increments for the next 16 byte transfer). Also in ID1, certain instruction types are identified, such as changes of flow, and immediate and/or displacement operands are separated. The ID2 stage completes decoding the X and Y instructions, generating entry points for the microrom and decoding addressing modes and register fields.

During the ID stages, the optimum pipe for executing an instruction is determined, and the instruction is issued into that pipe. Pipe switching allows instructions to be switched from ID2X to AC1Y, and from ID2Y to AC1X. For the exemplary embodiment, certain instructions are issued only into the X pipeline: change of flow instructions, floating point instructions, and exclusive instructions. Exclusive instructions include: any instruction that may fault in the EX pipe stage and certain types of instructions such as protected mode segment loads, string instructions, special register access (control, debug, test), Multiply/Divide, Input/Output, PUSHA/POPA (PUSH all/POP all), and task switch. Exclusive instructions are able to use the resources of both pipes because they are issued alone from the ID stage (i.e., they are not paired with any other instruction). Except for these issue constraints, any instructions can be paired and issued into either the X or Y pipe.

The address calculation stages AC1 and AC2 calculate addresses for memory references and supply memory operands. The AC1 stage calculates two 32 bit linear (three operand) addresses per clock (four operand addresses, which are relatively infrequent, take two clocks). During this pipe stage, data dependencies are also checked and resolved using the register translation unit 25a (including register renaming hardware) -- the 32 physical registers 24 are used to map the 8 general purpose programmer visible logical registers defined in the X86 architecture (EAX, EBX, ECX, EDX, EDI, ESI, EBP, ESP).

The AC unit includes 8 architectural (logical) registers (representing the X86 defined register set) that are used by the AC unit to avoid the delay required to access in AC1 the register translation unit before accessing register operands for address calculation. For instructions that require address calculations, AC1 waits until the required data in the architectural registers is valid (no read after write dependencies) before accessing those registers. During the AC2 stage, source operands are obtained by accessing the register file 26 and the unified cache 60 with the physical address (for cache hits, cache access time for the dual ported unified cache is the same as that of a register, effectively extending the register set) -- the physical address is either the linear address, or if address translation is enabled, a translated address generated by the ATU 50.

Translated addresses are generated by the ATU 50 (using a TLB or translation lookaside buffer) from the linear address using information from page tables in memory and workspace control registers on chip. The unified cache is virtually indexed and physically tagged to permit, when address translation is enabled, set selection with the untranslated address (available at the end of AC1) and, for each set, tag comparison with the translated address from the ATU (available early in AC2). Checks for any segmentation and/or address translation violations are also performed in AC2.

Instructions are kept in program order until it is determined that they will not cause an exception. For most instructions, this determination is made during or before AC2 -- floating point instructions and certain exclusive instructions may cause exceptions during execution. Instructions are passed in order from AC2 to EX (or in the case of floating point instructions, to the FPU) -- because integer instructions that may still cause an exception in EX are designated exclusive, and therefore are issued alone into both execution pipes, handling exceptions in order (i.e., maintaining precise exceptions) is ensured.

The execution stages EXX and EXY perform the operations defined by the instruction. Instructions spend a variable number of clocks in EX, i.e., they are allowed to execute out of order (out of order completion). Both EX stages include adder, logical, and shifter functional units, and in addition, the EXX stage contains multiply/divide hardware.

The write back stage WB updates the register file 24, condition codes, and other parts of the machine state with the results of the previously executed instruction. The register file is written in PH1 (phase 1) of WB, and read in PH2 (phase 2) of AC2.

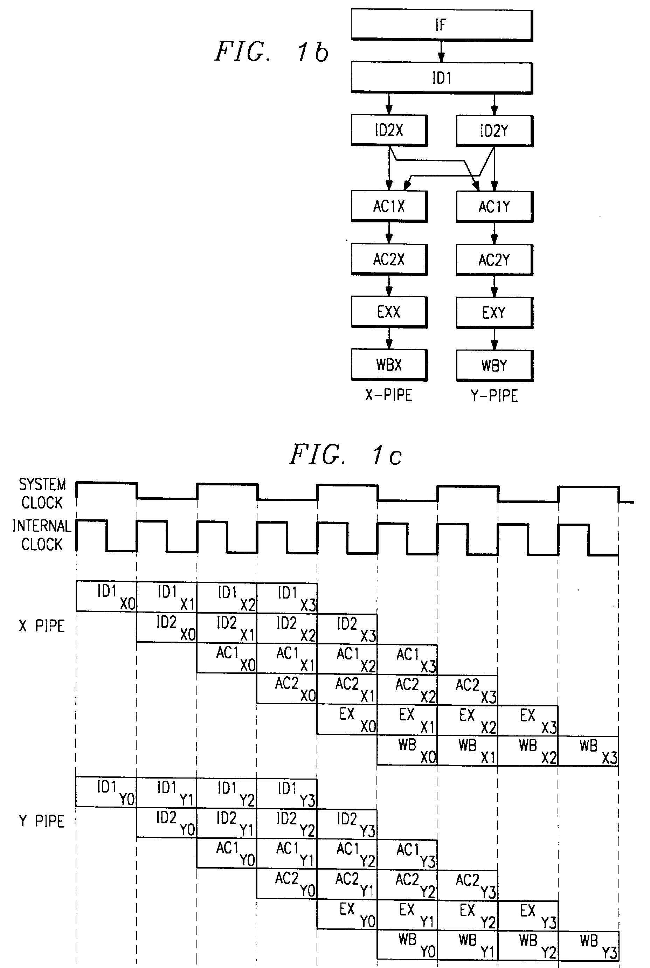

Figure 1c illustrates an flow of eight instructions through the X and Y pipelines, idealized to illustrate the major advantage of pipelining -- increasing the number of instructions completed per clock without reducing the execution time of an individual instruction. As shown, no stage requires more than one internal clock cycle (2X the external clock) -- in actual operation, one or more stages may require additional clock cycles to complete, thereby changing the flow of instructions through the other pipe stages. Moreover, the flow of instructions through one pipeline may be dependent upon the flow of instructions through the other pipeline.

### 1.2. System

Referring to Figure 2, for the exemplary embodiment, microprocessor 10 is used in a processor system that includes a single chip memory and bus controller 82. The memory/bus controller 82 provides the interface between the microprocessor and the external memory subsystem -- level two cache 84 and main memory 86 - controlling data movement over the 64 bit processor data bus PD (the data path is external to the controller which reduces its pin count and cost).

Controller 82 interfaces directly to the 32-bit address bus PADDR, and includes a one bit wide data port (not shown) for reading and writing registers within the controller. A bidirectional isolation buffer 88 provides an address interface between microprocessor 80 and VL and ISA buses.

Controller 82 provides control for the VL and ISA bus interface. A VL/ISA interface chip 91 (such as an HT321) provides standard interfaces to a 32 bit VL bus and a 16 bit ISA bus. The ISA bus interfaces to BIOS 92, keyboard controller 93, and I/O chip 94, as well as standard ISA slots 95. The interface chip 91 interfaces to the 32 bit VL bus through a bidirectional 32/16 multiplexer 96 formed by dual high/low word [31:16]/[15:0] isolation buffers. The VL bus interfaces to standard VL slots 97, and through a bidirectional isolation buffer 98 to the low double word [31:0] of the 64 bit processor data bus PD.

### 2. Speculative Execution

Referring to Figures 1a and 1b, in general, microprocessor 10 supports speculative execution in the case of both branch instructions (branches) and floating point instructions (floats). That is, instructions following either a branch or a float are speculatively allowed to proceed in the execution pipelines and complete execution.

The speculative execution of instructions past a branch or float may modify the processor state (processor resources) in ID, AC1 and EX. The contents of the register file are read in AC2 and used in EX, and the results are then written back in WB (PH1). Branches are resolved no later that WB (prior to any register file writeback) -- floats may fault after a subsequent speculatively issued instruction completes WB.

For the exemplary embodiment, speculative execution extends to writing speculative results into the register file, and reading those speculative results as speculative execution continues. Memory (cache) is not speculatively modified, but rather, writes (and floating point stores) for which a corresponding speculation instruction has not been resolved are queued into the (pre-cache) write buffers 29 -- these pending writes are retired as the outstanding speculation instruction is resolved.

If a branch is mispredicted (which will not be known until the EX or WB stage for the branch instruction), or if a float faults (which may be tens or even hundreds of clocks after being issued to the FPU), then the execution pipeline must be repaired to the point of the faulting or mispredicted instruction (i.e., the execution pipeline is flushed behind that instruction), and instruction fetch restarted. Pipeline repair is accomplished by creating checkpoints of the processor state at each pipe stage as a predicted branch or float enters that stage. For these checkpointed instructions, all resources (programmer visible registers, instruction pointer, condition code register) that can be modified by succeeding speculatively issued instructions are checkpointed. If a checkpointed floating point instruction faults or a checkpointed branch is mispredicted, the execution pipeline is flushed behind the checkpointed instruction - - for floats, this will typically mean flushing the entire execution pipeline, while for a mispredicted branch there may be a paired instruction in EX and two instructions in WB that would be allowed to complete.

### 2.1. Terminology

Speculative execution means speculatively issuing instructions past branches or floats (or other control hazard instructions), and speculatively executing those instructions such that the processor state (instruction pointer, stack pointer, registers, condition codes, flags) changes. The term speculation instruction refers to either a branch, a UCOF (unconditional change of flow) or a float (or other control hazard instruction), while the terms speculatively issued and speculatively executed instructions refer to instructions that issue after a speculation instruction. A speculation error is a branch misprediction or floating point exception. A speculation instruction is retired if no speculation error results from its execution - - otherwise, the execution pipeline must be repaired by recovering the processor state at the time the speculation instruction issued. The speculation level is the number of unresolved speculation instructions that are outstanding at a given time.

### 2.2. Branch Processing Unit

For the exemplary microprocessor, the Branch Processing Unit provides control for speculative execution through (a) controlling the issue of branches (and UCOFs) and floats, and (b) controlling the checkpointing of processor resources to enable pipeline repair including restoration of the processor state.

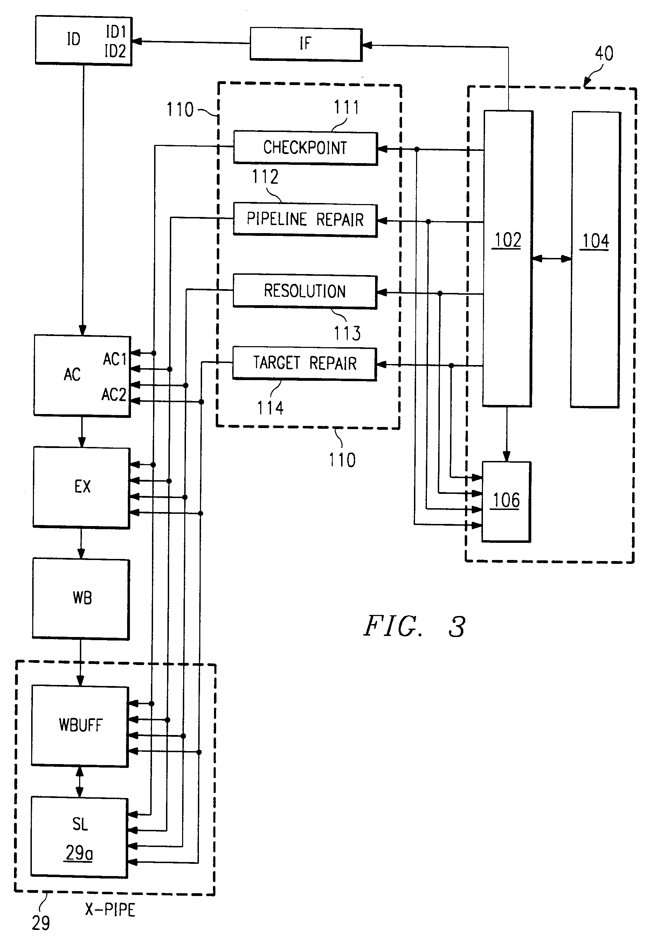

Referring to Figure 3, speculation control is provided by BPU 40, and in particular by resolution control 102. The resolution control controls the allocation of resolution buffers 104, and speculation level maintained by the speculation level logic 106.

The speculation level logic identifies the current speculation level of the execution pipeline (which is derived from the valid bits for each of the resolution buffers). As outstanding speculation instructions (branches, UCOFs, and floats) are resolved, the speculation levels for the pipe stages are: (a) in the case of a retire, decreased, or (b) in the case of a branch misprediction or floating point exception, set to the lowest level in preparation for instruction restart (note that, if a speculative floating point instruction is outstanding, a subsequent branch misprediction need not affect that instruction, but only reduce the speculation level to the level of the branch).

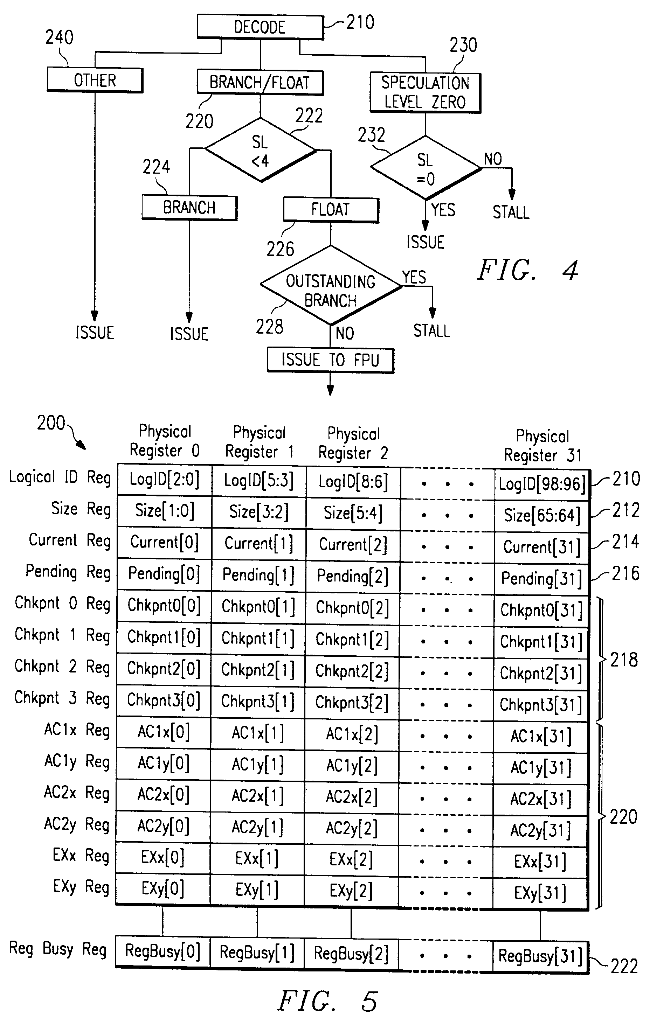

Figure 5 illustrates only a single execution pipeline -- the BPU provides speculation control for both the X and Y pipes, with the implementation for both pipes being identical.

To support speculative execution, the resolution control 102 (a) controls the issue of speculation instructions through the allocation of resolution buffers 104, and (b) controls checkpointing of the processor state through the use of four speculation control vectors 110: (1) checkpoint 111, (2) resolution 112, (3) pipeline repair 113, and (3) target mismatch repair 114. These vectors are output to the AC and EX stages of the execution pipeline, as well as the write buffers 29.

For the exemplary embodiment, resolution control logic 102 is also responsible for repairing the IF (prefetcher) and ID (decoder) stages after a mispredicted branch or floating point exception -- the associated instruction pointer is checkpointed into an allocated resolution buffer for use in restoration during repair). After ID, AC1 and EX are the only pipe stages that have processor resources requiring checkpointing -- AC1 checkpoints the instruction and stack pointers and the register translation unit (25a in Figure 1a), while EX checkpoints the condition codes and applications flags.

In addition, the write buffers 29 queue writes to memory pending resolution of the associated speculation conditions. The write buffers include speculation level logic 29a that, in response to the speculation control vectors 110 from resolution control 102, retires queued writes by either completing the write if a speculation condition is resolved, or invalidating the write if repair is required.

Subject to speculation control, resolution buffers 104 are allocated for (a) branches, (b) UCOFs, and (c) floats. The resolution buffers are allocated in ID2, and resolved in EX or WB. If a resolution buffer cannot be allocated because of the current speculation level (i.e., four outstanding branches or floats), then the instruction will stall in ID2 until an outstanding speculation instruction is resolved. The resolution buffer has four entries, one for each of up to four unresolved COFs or floats, i.e., one for each speculation level.

### 2.3. Speculative Issue

Referring to Figure 3, for the purposes of this Detailed Description of the exemplary embodiment, the ID2 stage will be considered to be the instruction issue point -- speculation instructions that cannot be speculatively issued will stall at ID2. From above, speculation instructions are issued into the X-pipe (floating point instructions are issued to the FPU in AC2).

Assuming that the speculation level is less than maximum, a decoded branch or float is allocated to an available resolution buffer 104. Upon allocation, the speculation instruction issues from ID2 into the X-pipe. Speculative execution continues with the speculative issue of instructions past the speculation instruction.

When the speculation instruction issues from ID2, resolution control 102 pipes along with the instruction the checkpoint vector 111 to AC1, AC2, and EX. The checkpoint vector includes two fields:

| | |
|---|---|
| Allocate | Checkpoint Register ID |

In response, the pipe stage (AC1,EX) executing the speculation instruction checkpoints its modifiable resources to the checkpointed register specified by the Checkpoint Register ID (see, Section 3.2).

The checkpoint vector is also input to write buffer speculation level logic 29a (write buffers are allocated in AC2).

### 2.3.1. Branches

Referring to Figures 1b and 3, branches are decoded during ID1, and subject to issue constraints set forth in Section 2.4, issued into the X-pipe in ID2. The Branch Processing Unit (40 in Figure 1a) is notified in ID2, and allocates an entry into a branch resolution buffer 104 (if one is available) for storing information needed to repair the pipeline in the case of a speculation error (see, Section 4).

As noted, in the exemplary architecture, branches are guaranteed to resolve by WB. Moreover, branches are guaranteed to resolve before a subsequent, speculatively issued instruction in the Y-pipe (i.e., adjacent to the branch in the X-pipe) writes back any results to the register file.

### 2.3.2. Floating Point

Referring to Figures 1b and 3, floating point instructions are decoded during ID1, and subject to issue constraints set forth in Section 2.4, issued into the X-pipe in ID2. The BPU is notified in ID2, and allocates a branch resolution buffer (if one is available) for storing information needed to repair the pipeline in the case of a speculation error (see, Section 4).

Floats present two problems for speculative execution that require issue constraints (see, Section 2.5): (a) exception latency, and (b) exception order. During the exception latency for a floating point instruction executing in the floating point unit, numerous speculatively issued integer instructions may complete execution, including register file write back (writes to memory are queued in the write buffers) and including the speculative execution of subsequent branches. And, for the exemplary X86 ISA, exception order is required to be preserved.

Certain floats cannot cause exceptions (FPU status inquiries, for example). These non-faulting floating point instructions are treated as non-floating point instructions that can be speculatively issued in the same manner as normal integer instructions.

### 2.4. Resources Affected

All processor resources that can be changed by speculatively issued instructions prior to the speculation instruction being resolved are checkpointed to allow the processor state to be repaired in the case of a speculation error. However, for the exemplary embodiment, not all processor resources are checkpointed -- certain resources that are only used by selected instructions that appear infrequently in the typical code stream are not checkpointed.

As a result of not checkpointing certain processor resources, issue constraints are placed on those non-checkpointed instructions, also referred to as speculation level zero (SLZ) instructions, that during execution will change non-checkpointed processor resources (see, Section 2.5). Selecting those resources to not checkpoint involves a design trade-off based on the logic required to checkpoint a resource and the frequency an instruction appears in a typical code stream -- that is, the performance penalty associated with stalling the execution pipeline for a non-checkpointed instruction that cannot be speculatively issued (or only issued subject to issue constraints) and the amount of additional resources required for checkpoint and repair associated with the instruction. Those skilled in the art will recognize that a different design trade-off could be made, resulting in different issue constraints.

For the exemplary embodiment, the processor resources that are checkpointed are:

**Table 1**

| | |
|---|---|
| ID | IP |
| AC1 | IP |
| | SP |
| | Register Translation Unit |
| EX | Condition Codes |
| | Application Flags |

Note that the AC (architectural) registers in the AC unit (see, Section 1.1) are not checkpointed --these registers need only be refreshed after a floating point exception (through a read and writeback of the general register file, which also updates the AC registers), but not after a misprediction. Normal instruction sequencing ensures that any branch passing (in the X-pipe) from EX to WB will resolve (WB) in time to abort any write to the AC registers (also in WB) by an adjacent (Y-pipe) speculatively issued instruction. Note also that the register translation unit maintains complete logical-to-physical mapping for the register file, including checkpoint registers (see, Section 3.2).

For the exemplary embodiment, the processor resources that are not checkpointed are:

| | |
|---|---|
| AC1 | Segment descriptor registers |
| | Special Registers |
| EX | System Flags |

For the X86 ISA, special registers include registers for debug, control, test, and cache configuration. Instructions that change these resources during execution can be speculatively issued only under certain constraints.

### 2.4. Issue Constraints

For the exemplary embodiment, certain issue constraints are required because: (a) the entire processor state is not checkpointed, (b) speculative execution is supported for two types of control hazard instructions -- branches (and UCOFs) and floats -- that involve significantly different speculative execution conditions, and (c) exceptions (including floating point exceptions) must be handled in program order.

Referring to the flow chart in Figure 4, for the exemplary embodiment, two types of instructions can be decoded (210) that involve speculative issue considerations: (a) speculation instructions, and (b) non-checkpointed or SLZ (speculation level zero) instructions.

For branches and floats (220), if the speculation level (222) is 4, then, for the exemplary embodiment, the maximum speculation level has been reached, and the instruction will stall at ID2 until an outstanding branch or float retires (or until it is flushed because a speculation error requires a new instruction fetch into ID). If the maximum speculation level has not been reached, then a branch will issue (224) without further constraint (and the speculation level will be increased). A float (226) will issue only if there is not an outstanding branch (228). Note that multiple floats can be speculatively issued - the exemplary FPU maintains a FIFO load queue, thereby ensuring that exception order will be maintained in the FPU.

In summary, for the exemplary embodiment, the issue constraints are: (a) the speculation level must be less than four for a branch (or UCOF) or float to issue, (b) a float will issue only if there is not an outstanding branch (i.e., in the branch resolution buffer), and (c) SLZ instructions will only be issued if the speculation level is zero.

Those skilled in the art will recognize that these issue constraints are a matter of design choice. In particular, the constraint on issuing floating point instructions is a matter of resolution buffer management for the exemplary implementation.

### 3. Processor State

During speculative execution, the processor state is dynamically checkpointed using (a) the speculation level control logic, and (b) checkpointing logic. This logic is contained in the Branch Processing Unit, the AC and EX pipe stages (X and Y pipes), and the write buffers. For purposes of this section, the write buffers will be referred to as a pipe stage.

In particular, speculation level control logic and checkpointing logic are distributed among these pipe stages, with central control being provided by the BPU. Speculative execution results are stored: (a) in the checkpointed register file, or (b) the write buffers.

### 3.1. Speculation Level

Referring to Figure 3, for the exemplary embodiment, BPU 40 and write buffer 29 include speculation level logic 106 and 29a respectively.

In the BPU, the speculation level is a function of the valid bits in the resolution buffers 104. The speculation level logic performs logical operations on the valid bits to determine the speculation level -- ANDing the bits is used to determine if a resolution buffer is available for a new speculation instruction (speculation level less than 4), while ORing the bits is used to determine if a speculation level zero instruction can issue. All four valid bits together form a 4 bit SPEC (speculation) vector which is included in the pipeline repair vector.

In the write buffers, the speculation level logic maintains a 4 bit speculation (SPEC) vector corresponding to the speculation level for each speculative write queued into the write buffer. In response to speculation control vectors 110 from the BPU, the write buffer speculation level logic 29a assigns the appropriate speculation level to each write waiting to be retired.

AC1, AC2, and EX are able to store a single 4 bit SPEC vector. This vector is needed because the speculation level maintained by the BPU (i.e., the 4 valid bits of the resolution buffers) may not the same as that of AC and EX due to pipeline latency.

### 3.2. Checkpointing

Referring to Figure 1a, for the exemplary embodiment, the checkpoint registers are contained in the register translation unit 25a. In addition to ckeckpoint registers, the register translation unit includes register renaming hardware.

Figure 5 illustrates the exemplary checkpoint implementation. Translation control registers 200 are used by the register translation unit for register renaming and checkpointing. A Logical ID register 210 maps logical registers to physical registers. The Size register 212 stores a code corresponding to the size of the logical register to which the physical register is assigned.

The Current register 214 indicates the registers which are the most recently assigned for a given logical register. Thus, every time a new physical register is allocated, the current bit for the physical register which previously was the current register for the corresponding logical register is turned off and the current bit for the newly allocated register is turned on. Consequently, at any time, the Current register 214 has eight bits on and twenty-four bits off. For each physical register, the Pending register 216 has a bit which indicates whether a write to that physical register is pending.

Four Checkpoint registers 218, Chkpnt0 - Chkpnt3, are used to store a copy of the Current register 214, each time a checkpoint occurs. In the exemplary embodiment, checkpoints occur whenever a branch or float is issued into AC1. The Checkpoint registers 218 are allocated on a rotating basis.

Checkpointing the stack and instruction pointers in AC1, and the condition codes and applications flags in EX is handled analogously (see, Table 1).

### 3.3. Results

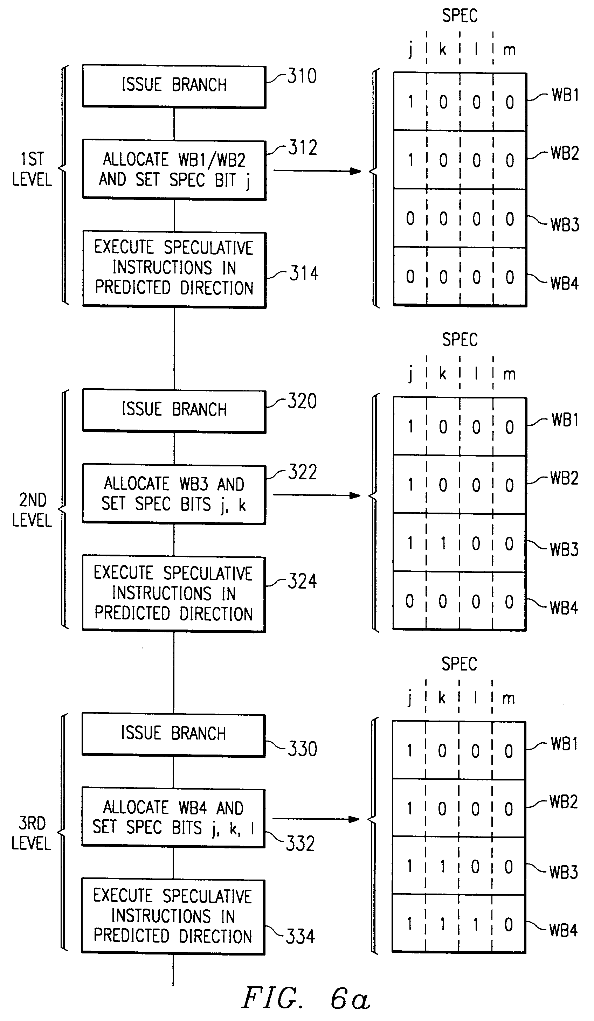

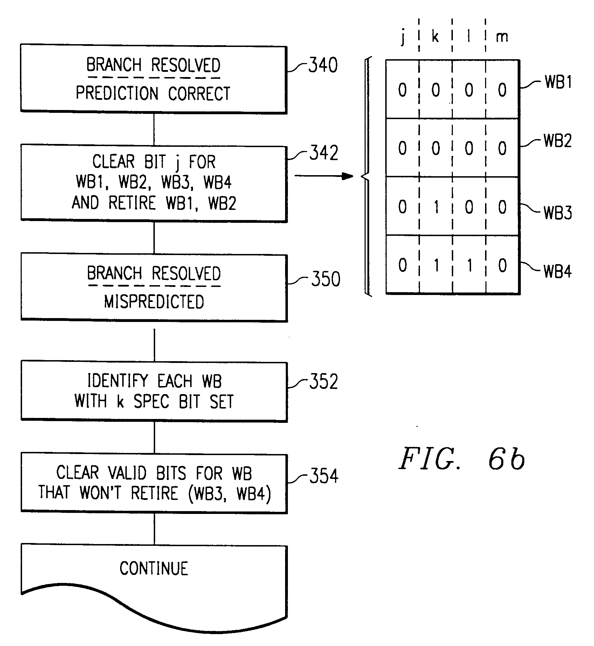

Figures 6a and 6b illustrate the operation of the write buffer speculation level logic (29a in Figure 3) in ensuring that the results of speculative writes are not retired to memory, and in removing speculatively written data from the write buffers. Allocation of speculative writes into the write buffers (29 in Figure 3) is discussed in this Section in connection with Figure 6a --retiring speculative writes is discussed in Section 4.1 in connection with Figure 10b).

Referring to Figure 10a, a branch (speculation instruction) issues (310) from ID2 to AC, which allocates (312) in AC2 two write buffer entries WB1,WB2 (the speculatively issued instructions in the predicted direction performing two write operations to memory, in this example). However, because the write operations to write buffer entries WB1,WB2 is speculative, at least one of the speculation control bits of the SPEC [jklm] vector is set during allocation, depending upon the speculation level of the write.

Thus, write buffer entries WB1,WB2 have their SPEC [j] bit set (indicating first order speculation). Write buffer entries WB3,WB4 are not yet allocated, and as such their speculation control bits are clear.

Speculative instructions in the predicted direction are executed (314), which will, if completed, effect the writes to the allocated write buffer entries WB1,WB2. Because the execution of these writes is speculative, however, the retire sequence should also include a gating decision preventing the retiring of a write buffer entry unless its SPEC bits are all clear, thereby preventing the results of speculative execution from being written to memory.

Second level speculation also occurs with the issue (320) of another branch. Second level speculation means that in order for the execution of the speculatively issued instructions for this branch to be successful, not only must that prediction (320) be correct, but also the first prediction (310).

Following issue of the second level branch (320), write buffer entry WB3 is allocated (322) in AC2. Since the write to write buffer entry WB3 is of second level speculation, both the j and k SPEC control bits are set. Instructions in the predicted direction of the branch are then issued and executed (324).

A third level of speculation is illustrated with respect to the issue of another branch (330) in the predicted direction of the original branch (310) and the second level branch (320).

### 4. Resolution/Repair

Resolution and repair involves: (a) Branch Resolution including resolving predicted target addresses (branches and UCOFs), predicted direction (branches), and floats, and (b) Pipeline Repair including controlling the restoration of checkpointed processor resources after a branch (or UCOF) misprediction or a floating point exception.

A COF is resolved when its actual target address has been calculated (AC1), and in the case of branches, conditional dependencies determined to resolve the direction prediction. A floating point instruction is resolved when it completes execution without faulting. For the exemplary embodiment, COF instructions are resolved in instruction order (COFs are allowed to retire even though floats are outstanding).

Branches are resolved by resolving both the predicted target address and predicted direction. Thus, for BPU hits (i.e., branches that are predicted at prefetch time), the predicted target address is compared to the actual (calculated) target address in AC2, and then the predicted direction is compared to the actual direction in EX/WB. For BPU misses (either predicted or assigned not-taken), only the direction needs to be resolved in EX/WB.

UCOFs are validated through comparison of the predicted and actual target address in AC2. While no direction resolution is required, to maintain resolution order, UCOF resolution also requires that all outstanding speculation instructions be resolved.

Referring to Figure 3, if a branch or float is resolved such that repair is not required, resolution control 102 broadcasts to the AC and EX pipe stages and the write buffers a resolution vector 113. This vector includes two fields:

| | |
|---|---|
| Deallocate | D[1:0] Index |

This resolution vector causes each pipe stage to deallocate one of four checkpoint registers, with the D Index identifying the checkpoint register to deallocate.

### 4.1. Out-of-Order Retire

Figure 6b illustrates a branch speculation instruction being resolved with a correct prediction (340), allowing write buffer entries WB1,WB2 to be retired to memory. Thus, the SPEC [j] bits of all speculative write buffer entries WB1-WB4 are cleared (342). Since write buffer entries WB1,WB2 now have all of their speculation control bits SPEC clear, these write buffer entries may be retired to memory.

Figure 10b also illustrates the affect of a repair on speculative writes in the write buffers that result from the second and third level branch instructions when the second level branch (320) is mispredicted. Detecting a mispredicted branch (350) means that if the writes to the allocated write buffer entries WB3,WB4 have not yet been performed, these writes will never be performed. If these writes have been performed (these write buffer entries are pending), the data should not be written to memory. Accordingly, write buffer entries WB3,WB4 must be cleared for additional use, without retiring their contents to memory.

Those write buffer entries identified (346) as having their SPEC [k] bit set are entries WB3 (second level speculation) and WB4 (third level speculation). The valid bits for these entries are cleared (354), such that entries WB3,WB4 may be reallocated and will not be retired. Retire pointers point to the ones of write buffer entries WB1-WB4 next to be retired, such that when the associated retire pointer points to entries WB3,WB4, these entries will be skipped (as though they were never allocated). This allows the retire pointers to "catch up" to the allocation pointers if their section of write buffer is empty. Repeated checking of the valid bits in the retire process can then safely stop, once the empty condition has been met.

### 4.2. Single Clock Repair

Pipeline repair after a branch (or UCOF) misprediction or floating point exception requires flushing the execution pipeline behind the checkpointed speculation instruction, and then restoring the checkpointed physical registers to recover the processor state. The exemplary microprocessor accomplishes repair from a mispredicted branch in a single clock.

Referring to Figure 3 resolution control 102 effects a pipeline repair of a speculation error by broadcasting to the AC and EX pipe stages, and the write buffers, the pipeline repair vector 112. The pipeline repair vector has three fields

| | | |
|---|---|---|
| SPEC [3:0] | Repair | R[1:0] Index |

The pipeline repair vector instructs the AC and EX pipe stages to flush the current instruction, and restore from the indexed checkpoint register. In addition, the 4 bit SPEC vector is used by the write buffer speculation level logic 29a to adjust its SPEC status, invalidating those writes affected by the speculation error. A repair after a floating point exception will typically require flushing the entire execution pipeline, while for a mispredicted branch there may be a paired instruction in EX and two instructions in WB that would be allowed to complete.

Thus, within one clock after the BPU detects a mispredicted branch, and broadcasts a repair vector 112 to the AC and EX pipe stages, the execution pipeline is repaired by restoring the processor state to that prior to the speculative execution of instructions past the branch.

In the exemplary embodiment, repair a floating point exception is handled differently than a repair from a mispredicted branch in one significant respect -- the AC registers must be rewritten from the (restored) register file. This is accomplished by performing under microcode control a read and writeback of the register file, which also writes to the AC registers.

This restoration of the AC registers is not required for branches because of the architectural feature of the exemplary microprocessor that branches must resolve in WB, prior to any writeback to the register file (which would also write to the AC registers) by an adjacent instruction in EXY. That is, for the worst case of a branch that resolves in WB and is paired with a speculatively issued instruction in EXY that would write to the register file (and the AC registers), if the branch is detected by the BPU as being mispredicted, it causes EXY to abort the speculatively issued instruction, thereby preventing any writeback.

Thus, for branches, coherency between the AC registers and the general register file is ensured, allowing a single clock repair operation. For floating point exceptions, coherency requires that the read and writeback operation to update the AC registers, which takes several additional clocks.

A special case of a repair is for a target mismatch. For a predicted taken branch (or UCOF prediction), if a comparison of the predicted target address with the actual target address calculated in AC1 indicates a mismatch, the BPU will immediately signal to AC a target mismatch with the target mismatch repair vector 114 -- instructions in EX and WB will be allowed to complete execution. This vector has two fields:

| | |
|---|---|
| TMM | SPEC [3:0] |

The target mismatch vector instructs AC to flush the current instruction, and to adjust its speculation status accordingly using the 4 bit SPEC vector.

Referring to Figure 5, checkpoint restore is accomplished by copying the Checkpoint register 218 associated with the branch to the Current register 214, restoring the state of the IP/SP and the physical registers to the state which existed immediately prior to the branch.

### 5. Conclusion

Although the Detailed Description of the invention has been directed to certain exemplary embodiments, various modifications of these embodiments, as well as alternative embodiments, will be suggested to those skilled in the art. For example, specific register structures, mappings, bit assignments, and other implementation details are set forth solely for purposes of providing a detailed description of the invention. Logic is generally used in the hardware sense, recognizing that implementations involving microcode or other software routines would be equivalent. Also, the specific address nomenclature (linear address, effective address, segment base, relative base, etc.) is conventional for the x86 architecture, and is used for the purpose of describing the exemplary embodiment only.

Various modifications based on trade-offs between hardware and software logic will be apparent to those skilled in the art. The invention encompasses any modifications or additions to the described embodiments and alternative embodiments that fall within the scope thereof.

## Claims

1. A pipelined processor with an execution pipeline including an instruction issue stage, an execution stage and at least one intermediate processing stage, the intermediate processing stage and the execution stage including modifiable processor resources that are modified by instruction processing in that stage, the processor selectively issuing branch instructions and then issuing and speculatively processing subsequent instructions in a predicted direction of a branch, comprising:
a) branch processing means (40) for predicting the direction of a branch instruction, and for resolving the branch by determining during or after the execution stage whether the actual predicted branch direction is correct;
b) speculation control means (106,29a) for selectively directing the instruction issue stage to issue the branch instruction and then, before such branch instruction is resolved, to issue at least one speculative instruction in the predicted direction of the branch; and
(c) the or one of the intermediate stages processing the speculative instruction by at least modifying the associated modifiable processor resources, prior to the branch being resolved;
characterised in that:
(d) each of the execution stage and the at least one intermediate stage includes checkpointing means (102, 111, 218) for checkpointing the modifiable processor resources for such stage; and
(e) the speculation control means controls processing of speculative instructions by directing the checkpointing means for each stage that processes a branch instruction (i) to checkpoint modifiable processor resources that a remodified, and in response to a branch misprediction, (ii) to repair such stage by restoring processor state using the corresponding modifiable processor resources.

2. The processor of Claim 1, wherein the speculation control means selectively provides three commands to each checkpointing means: (i) a checkpoint command that directs the checkpointing means to checkpoint modifiable processor resources that are modified into a designated checkpoint register, and after a branch is resolved, either (ii) in the case of a branch resolved as correctly predicted, a resolution command that directs the checkpointing means to deallocate such designated checkpoint register, or (ii) in the case of a branch resolved as mispredicted, a repair command that directs the checkpointing means to restore processor state from such checkpoint register.

3. The processor of Claim 2, wherein the repair command is broadcast to each checkpointing means, allowing each checkpointing means to initiate the process state restoration substantially simultaneously.

4. The processor of any of Claims 1-3, wherein the speculation control means includes speculation level means for maintaining a count of the number of branch instructions that are issued but not resolved, and for inhibiting the issue stage from issuing a branch instruction if the number of outstanding unresolved branch instructions is equal to a predtermined number.

5. The processor of any of Claims 1-4, wherein the speculative control means is inhibited from issuing the speculative instructions in the predetermined direction of the branch if such instruction is subject to a predetermined issue constraint.

6. The processor of Claim 5, wherein the checkpointing means for at least one stage checkpoints only a subset of the corresponding modifiable processor resources, and wherein a predetermined issue constraint is that the speculation control means will not issue any instruction that would be speculative if processing that instruction in such stage would modify a processor resource that is not checkpointed.

7. A method of implementing speculative execution in a pipelined processor with an execution pipeline including an instruction issue stage, an execution stage and at least one intermediate processing stage, the intermediate processing stage and the execution stage including modifiable processor resources that are modified by instruction processing in that stage, the processor selectively issuing branch instructions and then issuing and speculatively processing subsequent instructions in a predicted direction of a branch, comprising:
(a) predicting the direction of a branch instruction, and resolving the branch by determining during or after the execution stage whether the actual predicted branch direction is correct;
(b) selectively directing the instruction issue stage to issue the branch instruction and then, before such branch instruction is resolved, to issue at least one speculative instruction in the predicted direction of the branch; and
(c) processing the speculative instruction in the at least one intermediate stage, including modifying the associated modifiable processor resources, prior to the branch being resolved;
characterized by:
(d) checkpointing the modifiable processor resources for each of the execution stage and the at least one intermediate stage;
(e) controlling processing of speculative instructions for each stage that processes a branch instruction by (i) checkpointing modifiable processor resources that are modified, and in response to branch misprediction, (ii) repairing such stage by restoring processor state using the corresponding checkpointed modifiable processor resources.

8. The method of implementing speculative execution of Claim 7, wherein the step of controlling processing of speculative instructions is accomplished by selectively providing three commands to each stage: (i) a checkpoint command to cause checkpointing of modifiable processor resources that are modified into a designated checkpoint register, and after a branch is resolved, either (ii) in the case of a branch resolved as correctly predicted, a resolution command to deallocate such designated checkpoint register, or (ii) in the case of a branch resolved as mispredicted, a repair command restoring processor state from such checkpoint register.

9. The method of implementing speculative execution of Claim 8, wherein the repair command is broadcast to each stage, allowing each repair for each stage to be initiated substantially simultaneously.

10. The method of implementing speculative execution of any of Claims 7-9, further comprising the step of: maintaining a count of the number of branch instructions that are issued but not resolved, and inhibiting the issue stage from issuing a branch instruction if the number of outstanding unresolved branch instructions is equal to a predetermined number.

## Patentansprüche

1. Pipeline-Prozessor mit einer Ausführungspipeline einschließlich einer Befehlsausgabestufe, einer Ausführungsstufe und wenigstens einer Zwischenverarbeitungsstufe, wobei die Zwischenverarbeitungsstufe und die Ausführungsstufe modifizierbare Prozessorbetriebsmittel enthalten, welche durch Befehlsverarbeitung in der Stute modifiziert werden, wobei der Prozessor Verzweigungsbefehle selektiv ausgibt und danach darauffolgende Befehle in einer vorhergesagten Richtung einer Verzweigung ausgibt und spekulativ verarbeitet, mit:
(a) einer Verzweigungsverarbeitungseinrichtung (40), welche die Richtung eines Verzweigungsbefehls vorhersagt und die Verzweigung durch Bestimmung während oder nach der Ausführungsstufe, ob die gegenwärtig vorhergesagte Verzweigungsrichtung richtig ist, auflöst;
(b) einer Spekulationssteuereinrichtung (106, 29a), welche die Befehlsausgabestufe zur Ausgabe des Verzweigungsbefehls und danach, bevor ein derartiger Verzweigungsbefehl aufgelöst wird, zur Ausgabe wenigstens eines spekulativen Befehls in der vorhergesagten Richtung der Verzweigung selektiv anweist; und
(c) wobei die oder eine der Zwischenstufen den spekulativen Befehl wenigstens durch Modifizieren der zugeordneten modifizierbaren Prozessorbetriebsmittel verarbeitet, bevor die Verzweigung aufgelöst wird;
dadurch gekennzeichnet, dass:
(d) jede Ausführungsstufe und die wenigstens eine Zwischenstufe eine Fixpunktfestlegungseinrichtung (102, 111, 218) enthält, welche den modifizierbaren Prozessorbetriebsmitteln für eine derartige Stufe einen Fixpunkt festlegt; und
(e) die Spekulationssteuereinrichtung die Verarbeitung der spekulativen Befehle durch die Fixpunktfestlegungseinrichtung für jede Stufe, welche einen Verzweigungsbefehl verarbeitet, Anweisen steuert, (i) um den modifizierbaren Prozessorbetriebsmitteln, welche remodifiziert werden, einen Fixpunkt festzulegen und um im Ansprechen auf eine Verzweigungsfehlvorhersage (ii) eine derartige Stufe durch Umspeichern des Prozessorzustands unter Verwendung der entsprechenden modifizierbaren Prozessorbetriebsmittel zu reparieren.

2. Prozessor nach Anspruch 1, dadurch gekennzeichnet, dass die Spekulationssteuereinrichtung drei Befehle jeder Fixpunktfestlegungseinrichtung selektiv bereitstellt: (i) einen Fixpunktbefehl, welcher die Fixpunktfestlegungseinrichtung anweist, einen Fixpunkt den modifizierbaren Prozessorbetriebsmitteln festzulegen, welche in einem bestimmten Fixpunktregister modifiziert werden, und nachdem eine Verzweigung aufgelöst wird, entweder (ii) in dem Fall einer aufgelösten Verzweigung als richtig vorhergesagt - einen Auflösungsbefehl, welcher die Fixpunktfestlegungseinrichtung anweist, die Zuweisung eines derart bezeichneten Fixpunktregisters aufzuheben, oder (ii) in dem Fall einer aufgelösten Verzweigung als fehlvorhergesagt - einen Reparaturbefehl, welcher die Fixpunktfestlegungseinrichtung dazu anweist den Prozessorzustand von einem derartigen Fixpunktregister umzuspeichern.

3. Prozessor nach Anspruch 2, dadurch gekennzeichnet, dass der Reparaturbefehl jeder Fixpunktfestlegungseinrichtung gesendet wird, wobei es jeder Fixpunktfestlegungseinrichtung ermöglicht wird, mit der Prozesszustandsumspeicherung im wesentlichen gleichzeitig zu beginnen.

4. Prozessor nach einem der Ansprüche 1 bis 3, dadurch gekennzeichnet, dass die Spekulationssteuereinrichtung eine Spekulationspegeleinrichtung zum Beibehalten eines Zählwerts der Anzahl von Verzweigungsbefehlen, welche ausgegeben, jedoch nicht aufgelöst werden, und zur Verhinderung enthält, dass die Ausgabestufe einen Verzweigungsbefehl ausgibt, wenn die Anzahl von ausstehenden nicht aufgelösten Verzweigungsbefehlen gleich einer vorherbestimmten Anzahl ist.

5. Prozessor nach einem der Ansprüche 1 bis 4, dadurch gekennzeichnet, dass die spekulative Steuereinrichtung an der Ausgabe der spekulativen Befehle in der vorbestimmten Richtung der Verzweigung gehindert wird, wenn ein derartiger Befehl einer vorherbestimmten Ausgabebeschränkung unterworfen wird.

6. Prozessor nach Anspruch 5, dadurch gekennzeichnet, dass die Fixpunktfestlegungseinrichtung für wenigstens eine Stufe einen Fixpunkt bezüglich lediglich einer Untergruppe der entsprechenden modifizierbaren Prozessorbetriebsmittel festlegt und eine vorbestimmte Ausgabebeschränkung darin besteht, dass die Spekulationssteuereinrichtung nicht irgendeinen Befehl ausgeben wird, welcher spekulativ sein würde, falls eine Verarbeitung dahingehend erfolgt, dass ein Befehl in einer derartigen Stufe ein Prozessorbetriebsmittel modifizieren würde, für welches kein Fixpunkt festgelegt worden ist.

7. Verfahren des Implementierens einer spekulativen Ausführung in einem Pipeline-Prozessor mit einer Ausführungspipeline einschließlich einer Befehlsausgabestufe, einer Ausführungsstufe und wenigstens einer Zwischenverarbeitungsstufe, wobei die Zwischenverarbeitungsstufe und die Ausführungsstufe modifizierbare Prozessorbetriebsmittel enthalten, welche durch eine Befehlsverarbeitung in der Stufe modifiziert werden, und wobei der Prozessor Verzweigungsbefehle selektiv ausgibt und danach darauffolgende Befehle in einer vorhergesagten Richtung einer Verzweigung ausgibt und spekulativ verarbeitet, mit den Schritten:
(a) Vorhersagen der Richtung eines Verzweigungsbefehls und Auflösen der Verzweigung durch Bestimmen während oder nach der Ausführungsstufe, ob die gegenwärtig vorhergesagte Verzweigungsrichtung richtig ist;
(b) die Befehlsausgabestufe selektiv Anweisen, den Verzweigungsbefehl auszugeben und danach, bevor ein derartiger Verzweigungsbefehl aufgelöst worden ist, wenigstens einen spekulativen Befehl in der vorhergesagten Richtung der Verzweigung auszugeben; und
(c) Verarbeiten des spekulativen Befehls in der wenigstens einen Zwischenstufe einschließlich Modifizieren der zugeordneten modifizierbaren Prozessorbetriebsmittel vor dem Auflösen der Verzweigung;
gekennzeichnet durch:
(d) den modifizierbaren Prozessorbetriebsmitteln für jede Ausführungsstufe und wenigstens eine Zwischenstufe einen Fixpunkt Festlegen;
(e) Steuern der Verarbeitung der spekulativen Befehle für jede Stufe, welche einen Verzweigungsbefehl verarbeitet durch (i) den modifizierbaren Prozessorbetriebsmitteln, welche modifiziert werden, einen Fixpunkt Festlegen, und im Ansprechen auf eine Verzweigungsfehlvorhersage (ii) Reparieren einer derartigen Stufe durch Umspeichern des Prozessorzustands unter Verwendung der entsprechenden modifizierbaren Prozessorbetriebsmittel, für die ein Fixpunkt festgelegt wird.

8. Verfahren der Implementierung einer spekulativen Ausführung nach Anspruch 7, dadurch gekennzeichnet, dass der Schritt des Steuerns der Verarbeitung von spekulativen Befehlen durch selektives Bereitstellen von drei Befehlen jeder Stufe ausgeführt wird: (i) einen Fixpunktbefehl, um das Festlegen eines Fixpunkts den modifizierbaren Prozessorbetriebsmitteln zu veranlassen, welche in einem bestimmten Fixpunktregister modifiziert werden, und nachdem eine Verzweigung aufgelöst worden ist, entweder (ii) in dem Fall einer aufgelösten Verzweigung als richtig vorhergesagt - einen Auflösungsbefehl, um eine Zuweisung eines derart bestimmten Fixpunktregisters aufzuheben, oder (ii) in dem Fall einer aufgelösten Verzweigung als fehlvorhergesagt - einen Reparaturbefehl, welcher den Prozessorzustand von einem derartigen Fixpunktregister umspeichert.

9. Verfahren der Implementierung einer spekulativen Ausführung nach Anspruch 8, dadurch gekennzeichnet, dass der Reparaturbefehl jeder Stufe gesendet wird, wodurch es ermöglicht wird, dass mit der Reparatur für jede Stufe im wesentlichen gleichzeitig begonnen wird.

10. Verfahren der Implementierung einer spekulativen Ausführung nach einem der Ansprüche 7 bis 9, des weiteren gekennzeichnet durch den Schritt: Beibehalten eines Zählwerts der Anzahl von Verzweigungsbefehlen, welche ausgegeben, jedoch nicht aufgelöst werden, und Verhindern, dass die Ausgabestufe einen Verzweigungsbefehl ausgibt, wenn die Anzahl von ausstehenden nicht aufgelösten Verzweigungsbefehlen gleich einer vorherbestimmten Anzahl ist.

## Revendications

1. Processeur à pipeline ayant un pipeline d'exécution comprenant un étage d'émission d'instructions, un étage d'exécution et au moins un étage de traitement intermédiaire, l'étage de traitement intermédiaire et l'étage d'exécution comprenant des ressources de processeur modifiables qui sont modifiées par un traitement d'instructions dans cet étage, le processeur émettant sélectivement des instructions de branches, puis émettant et traitant de façon spéculative des instructions subséquentes dans une direction prédite d'une branche, comportant :
a) un moyen (40) de traitement de branche destiné à prédire la direction d'une instruction de branche, et à résoudre la branche en déterminant pendant ou après l'étape d'exécution si la direction de la branche prédite réelle est correcte ;
b) un moyen (106, 29a) de commande de spéculation destiné à diriger sélectivement l'étage d'émission d'instructions pour émettre l'instruction de branche puis, avant que cette instruction de branche soit résolue, pour émettre au moins une instruction spéculative dans la direction prédite de la branche ; et
c) le ou l'un des étages intermédiaires traitant l'instruction spéculative au moins en modifiant les ressources de processeur modifiables associées, avant que la branche soit résolue ;
caractérisé en ce que :
(d) chacun de l'étage d'exécution et du, au moins un, étage intermédiaire comprend un moyen (102, 111, 218) d'établissement de points de contrôle pour établir des points de contrôle des ressources de processeur modifiables pour cet étage ; et
(e) le moyen de commande de spéculation commande un traitement des instructions spéculatives en dirigeant le moyen d'établissement de points de contrôle pour chaque étage qui traite une instruction de branche afin qu'il (i) établisse des points de contrôle des ressources de processeur modifiables qui sont modifiées, et en réponse à une mauvaise prédiction de branche, (ii) répare cet étage en restaurant l'état du processeur en utilisant les ressources de processeur modifiables correspondantes.

2. Processeur selon la revendication 1, dans lequel le moyen de commande de spéculation fournit sélectivement trois ordres à chaque moyen d'établissement de points de contrôle : (i) un ordre d'établissement de points de contrôle qui impose au moyen d'établissement de points de contrôle d'établir des points de contrôle des ressources de processeur modifiables qui sont modifiées dans un registre de point de contrôle désigné, et après qu'une branche a été résolue, soit (ii) dans le cas d'une branche résolue comme correctement prédite, un ordre de résolution qui impose au moyen d'établissement de points de contrôle de désaffecter ce registre de point de contrôle désigné, ou (ii) dans le cas d'une branche résolue comme étant mal prédite, un ordre de réparation qui impose au moyen d'établissement de points de contrôle de restaurer l'état du processeur à partir de ce registre de point de contrôle.

3. Processeur selon la revendication 2, dans lequel l'ordre de réparation est diffusé vers chaque moyen d'établissement de points de contrôle, permettant à chaque moyen d'établissement de points de contrôle d'amorcer la restauration de l'état du processeur sensiblement en même temps.

4. Processeur selon l'une quelconque des revendications 1 à 3, dans lequel le moyen de commande de spéculation comprend un moyen à niveau de spéculation destiné à maintenir un comptage du nombre d'instructions de branche qui sont émises mais non résolues, et à empêcher l'étage d'émission d'émettre une instruction de branche si le nombre d'instructions de branches non résolues en suspens est égal à un nombre prédéterminé.

5. Processeur selon l'une quelconque des revendications 1 à 4, dans lequel le moyen de commande spéculative est empêché d'émettre les instructions spéculatives dans la direction prédéterminée de la branche si une telle instruction est soumise à une contrainte d'émission prédéterminée.

6. Processeur selon la revendication 5, dans lequel le moyen d'établissement de points de contrôle pour au moins un étage établit des points de contrôle uniquement sur un sous-ensemble des ressources de processeur modifiables correspondantes, et dans lequel une contrainte d'émission prédéterminée est que le moyen de commande de spéculation n'émette aucune instruction qui serait spéculative si un traitement de cette instruction dans un tel étage modifierait une ressource du processeur qui n'est pas soumise à un point de contrôle.

7. Procédé de mise en oeuvre d'une exécution spéculative dans un processeur à pipeline ayant un pipeline d'exécution comprenant un étage d'émission d'instructions, un étage d'exécution et au moins un étage de traitement intermédiaire, l'étage de traitement intermédiaire et l'étage d'exécution modifiant des ressources modifiables du processeur qui sont modifiées par un traitement d'instructions dans cet étage, le processeur émettant sélectivement des instructions de branches, puis émettant et traitant de façon spéculative des instructions subséquentes dans une direction prédite d'une branche, comprenant :
a) la prédiction de la direction d'une instruction de branche, et la résolution de la branche en déterminant pendant ou après l'étape d'exécution si la direction de branche prédite réelle est correcte ;
b) la commande sélective de l'étage d'émission d'instruction pour qu'il émette l'instruction de branche puis, avant que cette instruction de branche soit résolue, pour qu'il émette au moins une instruction spéculative dans la direction prédite de la branche ; et
(c) le traitement de l'instruction spéculative dans le, au moins un, étage intermédiaire, comprenant une modification des ressources modifiables associées du processeur, avant que la branche soit résolue ;
caractérisé par :
(d) l'établissement de points de contrôle des ressources modifiables du processeur pour chacun de l'étage d'exécution et du, au moins un, étage intermédiaire ;
(e) la commande du traitement d'instructions spéculatives pour chaque étage qui traite une instruction de branche en (i) établissant des points de contrôle des ressources modifiables du processeur qui sont modifiées, et en réponse à une mauvaise prédiction de branche, (ii) réparant cet étage par restauration de l'état du processeur en utilisant les ressources modifiables correspondantes du processeur pour lesquelles des points de contrôle ont été établis.

8. Procédé de mise en oeuvre d'une exécution spéculative selon la revendication 7, dans lequel l'étape de commande de traitement d'instructions spéculatives est réalisée par l'application sélective de trois ordres à chaque étage : (i) un ordre d'établissement de points de contrôle pour provoquer l'établissement de points de contrôle de ressources modifiables du processeur qui sont modifiées dans un registre désigné de points de contrôle, et après qu'une branche a été résolue, soit (ii) dans le cas d'une branche résolue comme étant correctement prédite, un ordre de résolution pour désaffecter ce registre de point de contrôle désigné, ou (ii) dans le cas d'une branche résolue comme étant mal prédite, un ordre de réparation restaurant l'état du processeur à partir de ce registre de point de contrôle.

9. Procédé de mise en oeuvre d'une exécution spéculative selon la revendication 8, dans lequel l'ordre de réparation est diffusé vers chaque étage, permettant d'amorcer sensiblement en même temps chaque réparation pour chaque étage.

10. Procédé de mise en oeuvre d'une exécution spéculative selon l'une quelconque des revendications 7 à 9, comprenant en outre l'étape de : maintien d'un comptage du nombre d'instructions de branches qui sont émises mais non résolues, et d'empêchement de l'étage d'émission d'émettre une instruction de branche si le nombre d'instructions de branches non résolues en suspens est égal à un nombre prédéterminé.
